Europäisches Patentamt

(19) European Patent Office

Office européen des brevets

(11) Veröffentlichungsnummer: **0 143 269**
A2

(12) **EUROPÄISCHE PATENTANMELDUNG**

(21) Anmeldenummer: 84111663.5

(22) Anmeldetag: 28.09.84

(51) Int. Cl.⁴: **H 04 J 3/08,** H 04 J 3/16, H 04 L 25/49

(30) Priorität: 29.09.83 DE 3335381

(43) Veröffentlichungstag der Anmeldung: 05.06.85 Patentblatt 85/23

(84) Benannte Vertragsstaaten: **AT CH DE FR IT LI**

(71) Anmelder: **Siemens Aktiengesellschaft, Berlin und München Wittelsbacherplatz 2, D-8000 München 2 (DE)**

(72) Erfinder: **Möhrmann, Karl Heinz, Dipl.-Ing., Kemptener Strasse 65, D-8000 München 71 (DE)**

(54) Verfahren und Anordnung zum Einfügen eines digitalen Schmalbandsignals in ein oder zum Abtrennen dieses Schmalbandsignals aus einem Zeitmultiplexsignal.

(57) Die Übertragunsstrecke für ein Zeitmultiplexsignal in einer Richtung enthält einen Einkoppler (5) und eine Übertragungsstrecke der Gegenrichtung einen Auskoppler (12). Mit diesen Elementen wird in ein oder aus einem Zeitmultiplexsignal, das ein 5B/6B-codiertes Breitbandsignal (DBSa, DBSb) enthält, im Austausch gegen Füllwörter ein Schmalbandsignal (ISDNa bzw. ISDNb) ein- bzw. ausgekoppelt. Dieses enthält nur solche 6B-Codewörter, die für ein 5B-Codewort in der positiven und negativen Gruppe gleich sind. Erfindungsgemäß werden bis zu acht ISDN-Signale einer Bitrate von 160 kbit/s in ein Zeitmultiplexsignal von 169,5744 Mbit/s, welches insbesondere ein Bildsignal enthält, ein- oder ausgekoppelt.

0143269

VPA 83 P 1761 E

Siemens Aktiengesellschaft
Berlin und München

**Verfahren und Anordnung zum Einfügen eines digitalen Schmalbandsignals in ein oder zum Abtrennen dieses Schmalbandsignals aus einem Zeitmultiplexsignal.**

Die Erfindung bezieht sich auf ein Verfahren zum Einfügen eines digitalen Schmalbandsignals in ein oder zum Abtrennen dieses Schmalbandsignals aus einem Zeitmultiplexsignal in einem synchronen Netz.

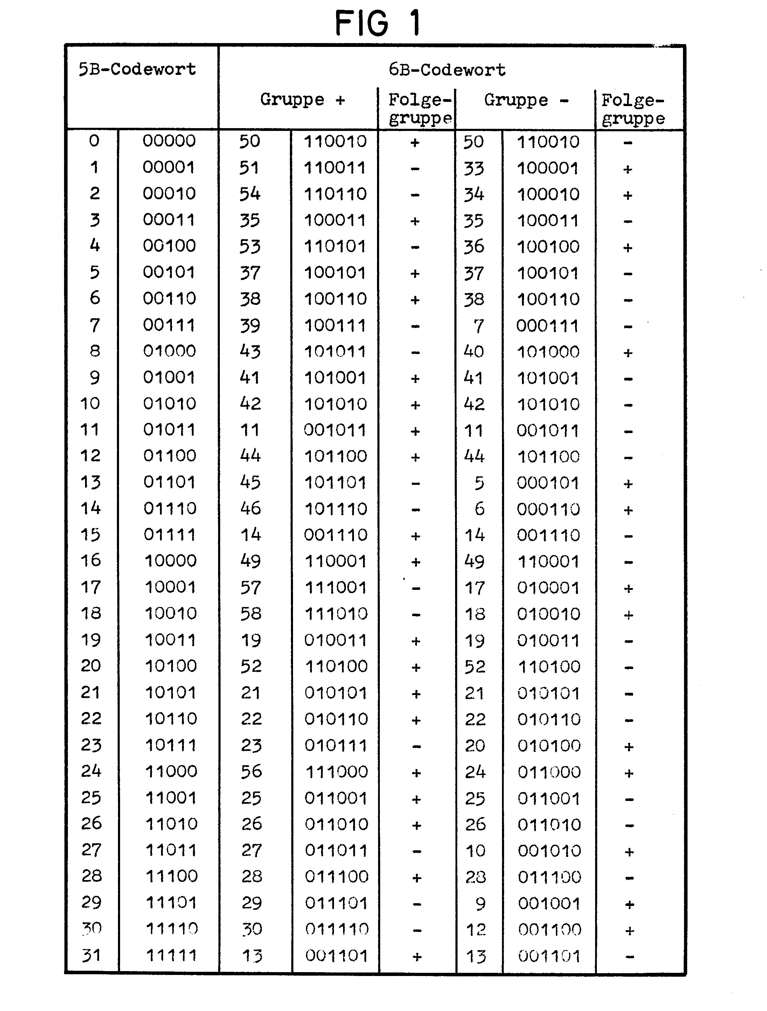

Ein 5B/6B-Leitungscode ist in der Zeitschrift "TELCOM-REPORT", April 1983, Beiheft Nachrichtenübertragung mit Licht, Seiten 133 bis 137, in Tabelle 2 abgedruckt. Diese zeigt auch Figur 1.

Bei der 5B/6B-Leitungscodierung wird ein Digitalsignal in fünf Bits lange unmittelbar aufeinanderfolgende Blöcke aufgeteilt, die als 5B-Codewörter bezeichnet werden. Entsprechend der Codetafel nach Figur 1 werden diese in sechs Bits lange 6B-Codewörter umgesetzt, was mit einer Erhöhung der Bitrate um 20% verbunden ist. Ob ein 6B-Codewort in der Codetafel der Spalte der positiven Gruppe (Gruppe +) oder der Spalte der negativen Gruppe (Gruppe -) entnommen wird, hängt davon ab, welche Gruppe bei dem vorangegangenen 6B-Codewort verwendet wurde. Der Wechsel zwischen den beiden Gruppen findet mit dem Ziel statt, die aufsummierte Anzahl der Nullen und Einsen in der Folge der 6B-Codewörter möglichst weit auszugleichen, um Gleichstromfreiheit zu erzielen. Unter den zweiunddreißig 5B-Codewörtern gibt es achtzehn, denen für beide Gruppen das gleiche 6B-Codewort zugeordnet ist. Diese 6B-Codewörter enthalten

Wke 1 Kom / 14.03.1984

jeweils gleich viele Nullen und Einsen. Diese in beiden Gruppen gleichen 6B-Codewörter (Auswahlcodewörter) können durch beliebige andere dieser 6B-Auswahlcodewörter ersetzt werden, ohne daß auf eine Gruppenumschaltung Rücksicht genommen werden muß. Der Gleichstrominhalt des Signals ändert sich dadurch nicht.

Aufgabe der Erfindung ist es, für das Einfügen eines digitalen Schmalbandsignals in ein oder zum Abtrennen dieses Schmalbandsignals aus einem Zeitmultiplexsignal eine weitere Lösung anzugeben, welche eine 6B/5B-Decodierung des kompletten Zeitmultiplexsignals längs der Strecke überflüssig macht und daher eine aufwandgünstige Realisierung der Ein- und Auskopplung des Schmalbandsignals ermöglicht.

Ausgehend von einem Verfahren der einleitend geschilderten Art wird diese Aufgabe erfindungsgemäß dadurch gelöst, daß im Zeitmultiplexsignal wenigstens ein Breitbandsignal in einem 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter übertragen werden, daß für das Schmalbandsignal ebenfalls der 5B/6B-Leitungscode mit ausschließlich Auswahlcodewörtern verwendet wird, daß die Auswahlcodewörter des Schmalbandsignals synchron gegen weitere Auswahlcodewörter als Füllwörter im Zeitmultiplexsignal und umgekehrt ausgewechselt werden, daß für das Breitbandsignal nach der 5B/6B-Leitungscodierung eine Bitrate 167,1168 Mbit/s gewählt wird, daß für das Schmalbandsignal ein bis acht 160-kbit/s-ISDN-Signale (Integrated Services Digital Network) gewählt werden,
daß diese ISDN-Signale in Blöcke zu je fünfundzwanzig Bits zerlegt werden, daß Blöcke von einem oder zwei ISDN-Signalen durch Zufügung von Zusatzsignalen in Blöcke von vierundsechzig Bits unter Erhöhung der Bitrate auf 409,6 kbit/s verlängert werden, daß vier 409,6-kbit/s Signale 4B-leitungscodiert zu einem 1,6384-Mbit/s-Schmalbandsignal verschachtelt werden, daß dieses 1,6384-Mbit/s-Schmalbandsignal wortsynchron zu einem 2,4576-Mbit/s-Schmalbandsignal 4B/6B-leitungscodiert wird, daß das 167,1168-Mbit/s-Breitbandsignal und das 2,4576-Mbit/s-Schmalbandsignal 6B-wortweise zu einem 169,5744-Mbit/s-Zeitmultiplexsignal verschachtelt werden, daß das Schmalbandsignal an der Abtrennstelle erkannt und abgetrennt wird, daß das Schmalbandsignal 6B/4B-leitungscodiert wird, daß das Schmalbandsignal in vier 409,6-kbit/s-Signale zerlegt wird und daß aus jedem 409,6-kbit/s-Signal die ISDN-Signale abgetrennt werden.

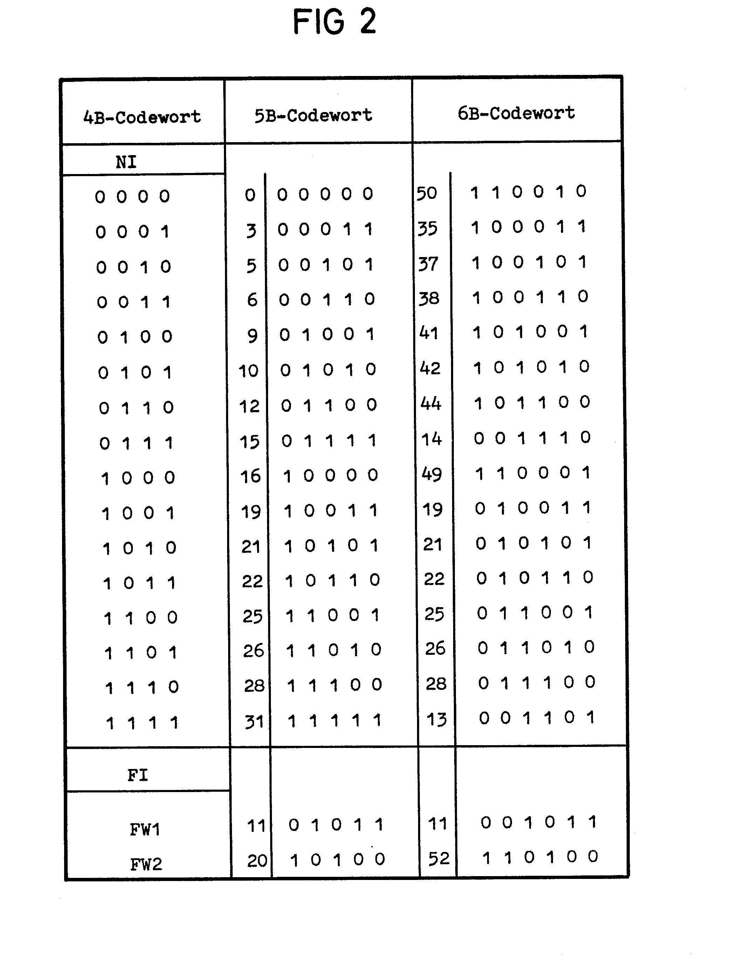

Eine Umsetzung von 4B-Codewort zu 6B-Codewort kann beispielsweise nach der Codetafel in Figur 2 erfolgen, in der auch die zugehörigen 5B-Codewörter angegeben sind. Die Nutzinformation ist mit NI und die Füllinformation mit FI bezeichnet. Die beiden als Füllwörter verwendeten 6B-Auswahlcodewörter FW1 und FW2 haben die Bedeutung eines digitalen Leerzeichens,solange in das Zeitmultiplexsignal kein·5B/6B-leitungscodiertes Schmalbandsignal eingefügt worden ist. Diese Füllwörter können auch wieder eingefügt werden, nachdem das Schmalbandsignal abgetrennt worden ist.

Soll das Schmalbandsignal bereits am Anfang der Übertragungsstrecke in das Zeitmultiplexsignal eingefügt und dieses Schmalbandsignal erst am Ende dieser Übertragungsstrecke wieder abgetrennt werden, ist es vorteilhaft, wenn im Zeitmultiplexsignal wenigstens ein Breitbandsignal in einem 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter

0143269

übertragen werden, wenn für das Schmalbandsignal ebenfalls der 5B/6B-Leitungscode mit ausschließlich Auswahlcodewörtern verwendet wird, wenn die Auswahlcodewörter des Schmalbandsignals synchron gegen weitere Auswahlcodewörter als Füllwörter im Zeitmultiplexsignal und umgekehrt ausgewechselt werden, wenn für das Breitbandsignal vor der 5B/6B-Leitungscodierung eine Bitrate 139,264 Mbit/s gewählt wird, wenn für das Schmalbandsignal ein bis acht 160-kbit/s-ISDN-Signale gewählt werden, wenn diese ISDN-Signale in Blöcke zu je fünfundzwanzig Bits zerlegt werden, wenn Blöcke von einem oder zwei ISDN-Signalen durch Zufügung von Zusatzsignalen in Blöcke von vierundsechzig Bits unter Erhöhung der Bitrate auf 409,6 kbit/s verlängert werden, wenn vier 409,6-kbit/s-Signale 4B-leitungscodiert zu einem 1,6384-Mbit/s-Schmalbandsignal verschachtelt werden, wenn dieses 1,6384-Mbit/s-Schmalbandsignal wortsynchron zu einem 2,048-Mbit/s-Schmalbandsignal 4B/5B-leitungscodiert wird, wenn das 139,264-Mbit/s-Breitbandsignal und das 2,048-Mbit/s-Schmalbandsignal 5B-wortweise zu einem 141,312-Mbit/s-Zeitmultiplexsignal verschachtelt werden, wenn dieses wortsynchron zu einem 169,5744-Mbit/s-Zeitmultiplexsignal 5B/6B-leitungscodiert wird, wenn das Schmalbandsignal an der Abtrennstelle erkannt und abgetrennt wird, wenn das Schmalbandsignal 5B/4B-leitungsdecodiert wird, wenn das Schmalbandsignal in vier 409,6-kbit/s-Signale zerlegt wird und wenn aus jedem 409,6-kbit/s-Signale die ISDN-Signale abgetrennt werden.

Vorteilhaft ist es, wenn als Zusatzsignale Kennungsinformationen eingespeist werden.

Vorteilhaft ist es weiter, wenn zum Erkennen des Schmalbandsignals die zyklisch auftretende Folge von Auswahlcodewörtern des Schmalbandsignals ausgewertet wird.

Vorteilhaft ist es außerdem, wenn zur Übertragung eines oder zweier ISDN-Signale in Schmalbandsignalen ein 2,048-Mbit/s-Schmalbandsignal durch fünffache Wiederholung jedes Bits eines 409,6-kbit/s-Signals gewonnen wird.

Vorteilhaft ist es schließlich, wenn die Bitrate des 5B-codierten Zeitmultiplexsignals als Vielfaches von 2,048 Mbit/s gewählt wird.

Anordnungen zur Durchführung des erfindungsgemäßen Verfahrens sind Unteransprüchen zu entnehmen.

Anhand von Ausführungsbeispielen wird die Erfindung nachstehend näher erläutert.

Fig. 3 zeigt eine zweiseitig gerichtete Übertragungsstrecke mit Ein- und Auskopplung.
Fig. 4 zeigt eine einseitig gerichtete Übertragungsstrecke mit Ein- und Auskopplung an Stellen, die von den Streckenenden abgesetzt sind,
Fig. 5 zeigt eine einseitig gerichtete Übertragungsstrecke mit Ein- und Auskopplung an den Streckenenden.
Fig. 6 zeigt eine Anordnung zur Umsetzung von acht ISDN-Signalen in 4B-Codewörter und
Fig. 7 zeigt eine Anordnung zur Umsetzung von 4B-Codewörtern in acht ISDN-Signale.

Im folgenden sei angenommen, daß das Netz synchron sei, daß also die Taktfrequenzen der Breitband- und ISDN-Signale fest verkoppelt sind.

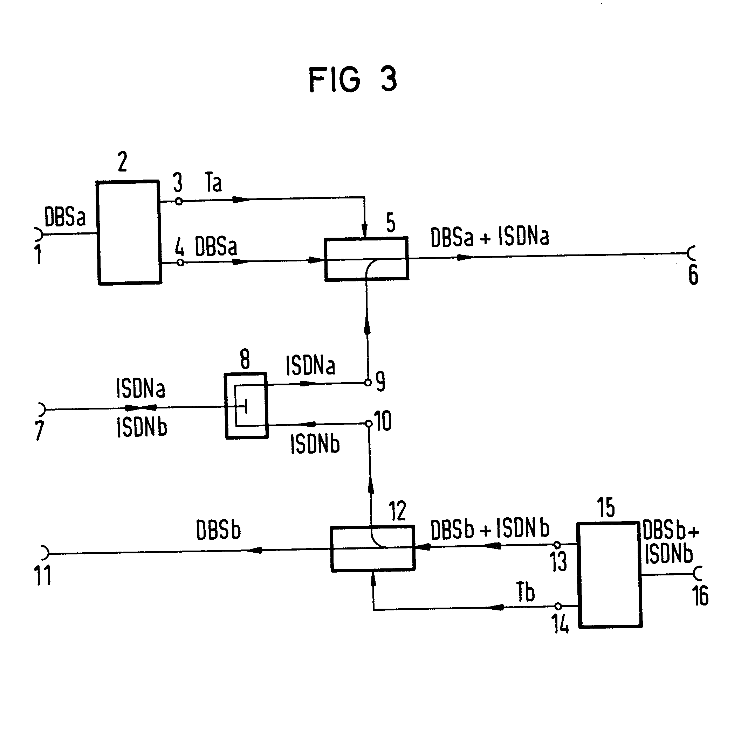

Figur 3 zeigt eine vom Eingang 1 zum Ausgang 6 gerichtete erste Übertragungsstrecke für ein erstes Zeitmultiplexsignal und eine vom Eingang 16 zum Ausgang 11 gerichtete zweite Übertragungsstrecke für ein zweites Zeitmultiplexsignal.

Die Anordnung enthält Taktableitungen 2 und 15 für Takte Ta und Tb, einen Einkoppler 5, einen Auskoppler 12, eine Gabel 8 und einen Zweidrahtanschluß 7 für ISDN-Signale.

Im Einkoppler 5 wird das erste Zeitmultiplexsignal mit dem digitalen Breitbandsignal DBSa um das ISDN-Signal ISDNa ergänzt, indem letzteres im Austausch gegen Füllwörter eingefügt wird. Durch diese Einfügung wird daher die Bitrate des Signals nicht erhöht. Im Auskoppler 12 wird dem zweiten Zeitmultiplexsignal mit dem zweiten Breitbandsignal DBSb ein ISDN-Signal ISDNb entnommen. Die Gabel 8 sorgt dafür, daß die ISDN-Signale ISDNa und ISDNb über den Zweidrahtanschluß 7 laufen können.

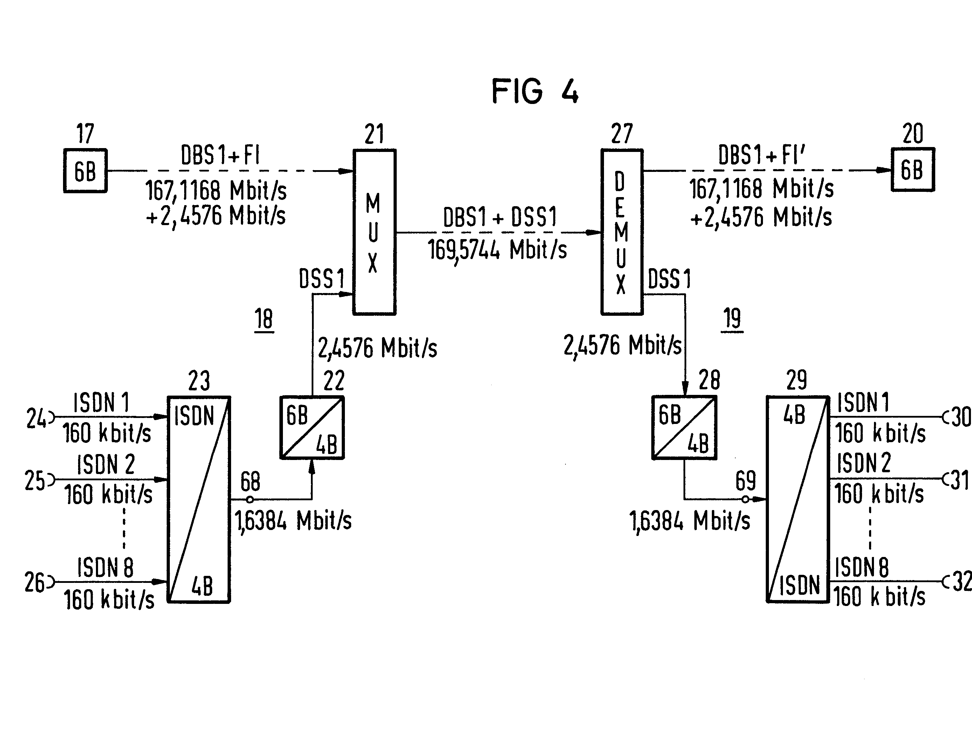

Figur 4 zeigt eine einseitig gerichtete Übertragungsstrecke, bei der eine Quelle 17 für ein Zeitmultiplexsignal, eine Einkopplung 18 für ein Schmalbandsignal, eine Auskopplung 19 für dieses Schmalbandsignal und eine Senke 20 für das Zeitmultiplexsignal jeweils an verschiedenen Orten angeordnet sind.

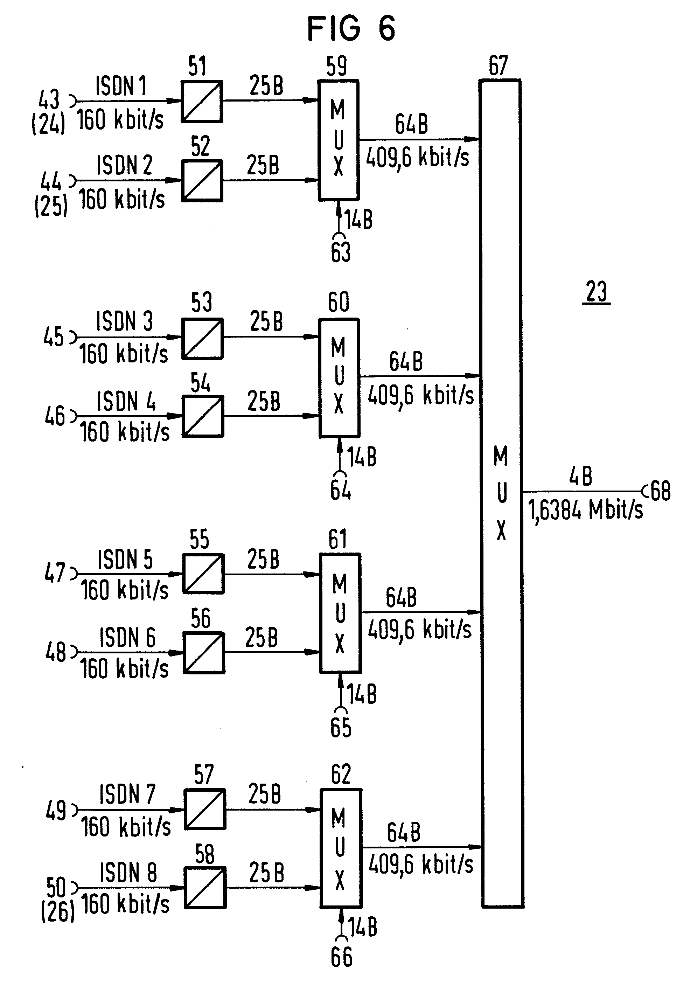

Die Einkopplung 18 enthält einen Multiplexer 21, einen 4B/6B-Umsetzer 22 und einen ISDN/4B-Umsetzer 23. Letzterer ist in Figur 6 detailliert dargestellt.

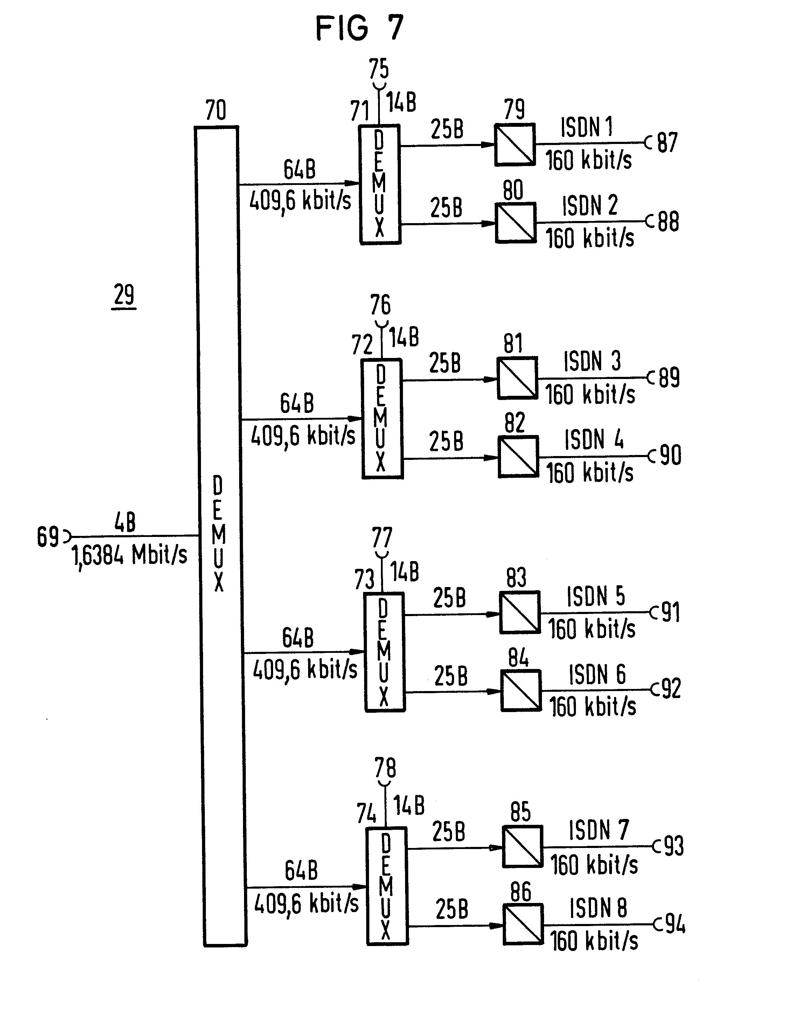

Der Auskoppler 19 enthält einen Demultiplexer 27, einen 6B/4B-Umsetzer 28 und einen 4B/ISDN-Umsetzer 29. Letzterer ist in Figur 7 ausführlicher dargestellt.

Die Quelle 17 gibt ein Zeitmultiplexsignal einer Bitrate 169,5744 Mbit/s ab, das ein digitales Breitbandsignal DBS1 einer Bitrate 167,1168 Mbit/s und eine Füllinformation FI einer Bitrate 2,4576 Mbit/s enthält. Die erstgenannte Bitrate ist aus einer Bitrate 139,264 Mbit/s durch 5B/6B-Codierung entstanden. An den Eingängen 24 bis 26 liegen acht ISDN-Signale ISDN1 bis ISDN8

0143269

jeweils mit einer Bitrate 160 kbit/s an. Diese werden im ISDN/4B-Umsetzer 23 in ein Signal einer Bitrate 1,6384 Mbit/s umgesetzt. (Die Umsetzung wird in Zusammenhang mit Fig. 6 näher beschrieben). Dieses Signal wird im 4B/6B-Umsetzer 22 entsprechend der Codetabelle nach Fig. 2 in ein digitales Schmalbandsignal DSS1 einer Bitrate 2,4576 Mbit/s umgesetzt. Letzteres und das Zeitmultiplexsignal der Quelle 17 wird im Multiplexer 21 zu einem Signal einer Bitrate 169,5744 Mbit/s zusammengesetzt, das das digitale Breitbandsignal DBS1 und das digitale Schmalbandsignal DSS1 enthält, welches wiederum die acht ISDN-Signale ISDN1 bis ISDN8 sowie Zusatzsignale umfaßt. Die Zusammensetzung erfolgt dabei in der Weise, daß die zyklisch im Zeitmultiplexsignal DBS1 + FI enthaltenen Füllwörter durch die 6B-Auswahlcodewörter des Signals DSS1 ersetzt werden.

Eine Variante besteht darin, von der Quelle 17 nur das Breitbandsignal mit der Bitrate 167,1168 Mbit/s abzugeben und durch zyklische Verschachtelung mit dem Schmalbandsignal DSS1 im Multiplexer 21 die Bitrate erst am Ausgang des Multiplexers 21 auf die Bitrate 169,5744 Mbit/s des Zeitmultiplexsignals zu erhöhen.

In jedem Fall muß die Verschachtelung der Signale wortsynchron zum Breitbandsignal DBS1 und zum Schmalbandsignal DSS1 erfolgen, wobei jedes 5B-Codewort des Signals DSS1 nur Zustände gemäß der in Figur 2 dargestellten Tabelle annimmt.

Der Demultiplexer 27 trennt das Schmalbandsignal DSS1 der Bitrate 2,4576 Mbit/s wieder ab und ersetzt, falls erforderlich, die Lücken durch eine Füllinformation FI'. Das digitale Breitbandsignal DBS1 mit der Füllinformation FI' der Bitrate zusammen 169,5744 Mbit/s wird der Senke 20 zugeführt. Die Auskopplung 19 setzt mittels des 6B/4B-Umsetzers 28 die Bitrate des Breitbandsignals DSS1 2,4576 Mbit/s auf 1,6384 Mbit/s herab. Der 4B/ISDN-Umsetzer 29 trennt die acht ISDN-Signale ISDN1 bis ISDN8 wieder ab und leitet sie zu den Ausgängen 30 bis 32. Dieser Vorgang ist in Zusammenhang mit Figur 7 näher beschrieben.

Auch hier kann als eine Variante die Bitrate des Breitbandsignals am Ausgang des Demultiplexers 27 durch Unterdrücken des Schmalbandsignals DSS1 auf die niedrigere Bitrate 167,1168 Mbit/s herabgesetzt werden.

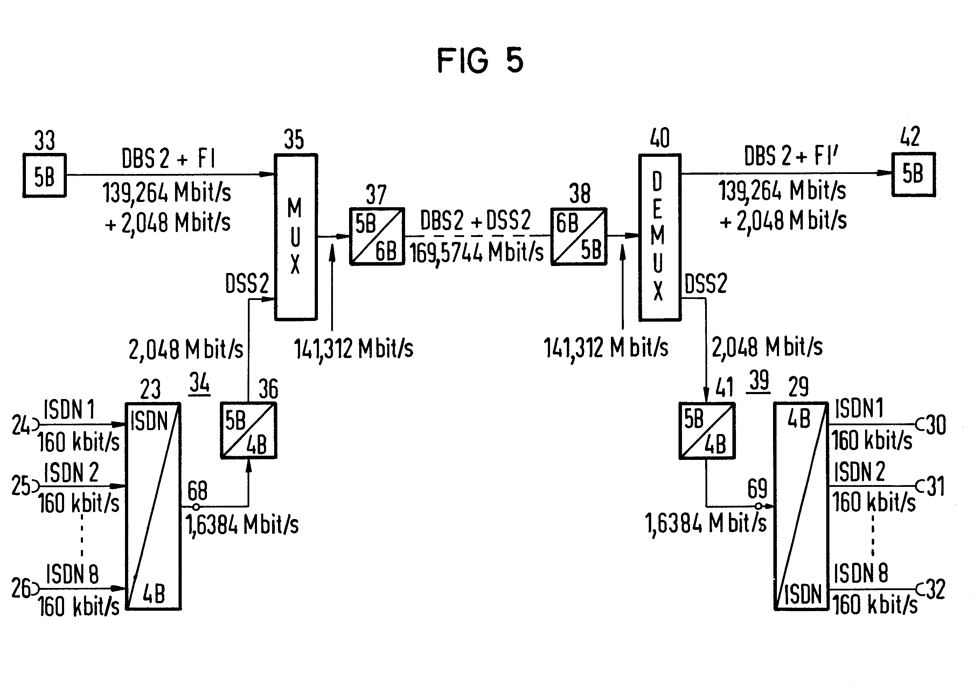

Figur 5 zeigt eine Variante einer einseitig gerichteten Übertragungsstrecke für ein Zeitmultiplexsignal, bei der die Einkopplung und die Auskopplung jeweils am Ende der Übertragungsstrecke liegen. Die Anordnung enthält eine Quelle 33 für das Zeitmultiplexsignal, einen Einkoppler 34, einen 5B/6B-Umsetzer 37, einen 6B/5B-Umsetzer 38, einen Auskoppler 39 und eine Senke 42 für das Zeitmultiplexsignal.

Der Einkoppler 34 enthält einen Multiplexer 35, einen 4B/5B Umsetzer 36 und den ISDN/Umsetzer 23. Der Auskoppler 39 besteht aus einem Demultiplexer 40, einem 6B/4B-Umsetzer 41 und dem 4B/ISDN-Umsetzer 29.

Die Quelle 33 gibt ein Zeitmultiplexsignal mit 5B-Codewörtern einer Bitrate 141,312 Mbit/s ab, das ein digitales Breitbandsignal DBS2 einer Bitrate 139,264 Mbit/s und eine Füllinformation FI einer Bitrate 2,048 Mbit/s enthält. Der ISDN/4B-Umsetzer 23 setzt acht ISDN-Signale ISDN1 bis ISDN8 mit einer Bitrate von je 160 kbit/s in ein 1,6384-Mbit/s-Signal um. Dieses wird im 4B/5B-Codeumsetzer 36 gemäß der in Figur 2 dargestellten Codetabelle in ein 2,048-Mbit/s-Signal DSS2 umgesetzt. Letzteres und das Zeitmultiplexsignal der Quelle 33 werden im Multiplexer 35 wortsynchron zu einem 141,312-Mbit/s-Signal zusammengefügt. Die Zusammenfügung entsteht durch Ersetzen der Füllinformation FI durch das Signal DSS2. Das Signal am Ausgang des Multiplexers 35 wird im 5B/6B-Umsetzer 37 leitungscodiert. Dabei entsteht eine Bitrate 169,5744 Mbit/s für das aus dem Breitbandsignal DBS2 und dem Schmalbandsignal DSS2 zusammengesetzte Zeitmultiplexsignal. Empfangsseitig setzt der 6B/5B-Umsetzer 38 das empfangene Zeitmultiplexsignal in ein 141,312-Mbit/s-Signal um, das dem Demultiplexer 40 zugeführt wird. Dieser trennt das Breitbandsignal DBS2 mit der Bitrate 139,264 Mbit/s und eine wiedereingesetzte Füllinformation FI' einer Bitrate 2,048 Mbit/s, die der Senke 42 zugeführt werden, von dem 2,048-Mbit/s-Schmalbandsignal. Dieses wird im 5B/4B-Umsetzer 41 in ein 1,6384-Mbit/s-Signal umgesetzt, aus dem der 4B/ISDN-Umsetzer 29 die acht ISDN-Signale ISDN1 bis ISDN8 separiert.

Auch in diesem Falle ist eine Variante möglich, bei welcher dem Multiplexer 35 das Breitbandsignal DBS2 ohne Füllinformation FI mit der Bitrate 139,264 Mbit/s zugeführt wird, so daß die Erhöhung der Bitrate auf 141,312 Mbit/s erst am Ausgang des Multiplexers 35 durch zyklische Verschachtelung des Breitbandsignals DBS2 und des Schmalbandsignals DSS2 stattfindet. Entsprechend ist es möglich, im Auskoppler 39 das Breitbandsignal DBS2 ohne Füllinformation FI abzutrennen.

Figur 6 zeigt einen Einkoppler 23. Dieser enthält ISDN/25B-Umsetzer 51 bis 58 mit Eingängen 43 bis 50, Multiplexer 59 bis 62 und 67 sowie einen Ausgang 68.

Die an den Eingängen 43 bis 50 - in den Figuren 4 und 5 24 bis 26 - anliegenden ISDN-Signale ISDN1 bis ISDN8 mit je 160 kbit/s werden in den ISDN/25B-Umsetzern 51 bis 58 in 25-Bits-Blöcke aufgeteilt. Dem Multiplexer 59 werden zwei derartige Blöcke sowie ein Zusatzsignal als 14-Bits-Block vom Eingang 63 zugeführt. Er gibt ein Signal von aufeinanderfolgenden 64-Bits-Codewörtern einer Bitrate 409,6 kbit/s ab. Die Multiplexer 60 bis 62 arbeiten entsprechend. Die vier 409,6-kbit/s-Signale werden im Multiplexer 67 zu einem 1,6384-Mbit/s-Signal zusammengefaßt, das am Ausgang 68 anliegt.

Figur 7 zeigt einen Auskoppler 29. Dieser enthält einen Demultiplexer 70 mit Eingang 69, weitere Demultiplexer 71 bis 74 und 25B/ISDN-Umsetzer 79 bis 86 mit Ausgängen 87 bis 94.

Ein am Eingang 69 angelegtes 1,6384-Mbit/s-Signal wird im Demultiplexer 70 in vier Signale einer Bitrate 409,6 kbit/s zerlegt, welche jeweils aus aufeinanderfolgenden vierundsechzig Bits langen Codewörtern bestehen. Diese Codewörter werden in den Demultiplexern 71 bis 74 in je zwei fünfundzwanzig Bits lange Blöcke und einen vierzehn Bits langen Block zerlegt. Letztere werden an Ausgänge 75 bis 78 gegeben. Die 25B-Blöcke werden in je einem 25B/ISDN-Umsetzer 79 bis 86 in ein ISDN-Signal ISDN1 bis ISDN8 einer Bitrate von je 160 kbit/s an den Ausgängen 87 bis 94 umgesetzt. Das Auffinden eines bestimmten ISDN-Signals erfolgt mittels Auswertung von Kennungsinformation, wie im folgenden beschrieben wird.

Die redundanten Bits im Schmalbandsignal, gebildet durch die jeweils vierzehn Bits des Zusatzsignals in jedem 64B-Codewort können mit Kennungsinformation zur Identifizierung der einzelnen ISDN-Kanäle belegt werden. Die Demultiplexer 70 bis 74 schalten so lange zyklisch weiter, bis eine vorgegebene Kennungsinformation an einem oder mehreren der Ausgänge 75 bis 78 erscheint.

Werden weniger als acht ISDN-Kanäle benötigt, so kann die Codierung vereinfacht werden. Bei ein bis zwei ISDN-Kanälen kann jedes Bit eines 409,6-kbit/s-Signals fünfmal wiederholt werden, um auf die verlangte Bitrate 2,048 Mbit/s zu kommen. Die 5B-Codewörter "11111" und "00000" entsprechen den erlaubten Kombinationen "0" und "31" der in Figur 2 dargestellten Tabelle. Dies kann das spätere Auffinden des Schmalbandsignals DSS im Zeitmultiplexsignals erleichtern.

Allgemein kann das Auffinden und Abspalten der ISDN-Signale mit Hilfe der Eigenschaft der Gleichstromfreiheit der 6B-Codewörter des Schmalbandsignals DSS erfolgen. Hierzu sucht der Demultiplexer 27 in Figur 4 das Schmalbandsignal DSS mit 6B-Codewörtern im Summensignal, indem er prüft, ob eine zyklisch auftretende Folge mittelwertfreier Codewörter vorliegt, welche die Codierungsbedingungen gemäß der in Figur 2 dargestellten Tabelle erfüllen. Nur solche Codewörter dürfen im Schmalbandsignal DSS auftreten. Zusätzlich erfolgt eine Synchronisierung anhand der in einem vorgegebenen 409,6-kbit/s-Signal enthaltenen Kennung, um nicht eine zufällige falsche Folge mittelwertfreier Codewörter zu erhalten.

Der Demultiplexer 27 und ebenso die Demultiplexer 70 bis 74 schalten so lange bitweise weiter, bis sowohl die Mittelwertfreiheit der Codewörter als auch die Auffindung der Kennung gegeben ist.

Dieses Verfahren hat den Vorteil, daß keine explizite Rahmenerkennung bei der hohen Taktrate des Zeitmultiplexsignals durchgeführt werden muß.

Eine entsprechende Anordnung ist auch in Verbindung mit dem in Figur 5 dargestellten Demultiplexer 40 möglich: Hier müssen die 5B-Codewörter des Schmalbandsignals

0143269

DSS2 daraufhin überprüft werden, ob sie gemäß der Tabelle in Figur 2 zulässig sind.

Die Einfügungen des Schmalbandsignals DSS in den Datenstrom kann derart erfolgen, daß die durch die Füllinformation FI belegten Bitplätze in der vorgehend beschriebenen Art aufgefunden, das Schmalbandsignal DSS wie beschrieben in 6B-Codewörter bzw. bei der Anordnung gemäß Figur 5 in 5B-Codewörter aufbereitet, mittels eines Pufferspeichers (First-in / First-out-Speichers) wortphasensynchronisiert und in das Summensignal eingebaut wird.

Im Auskoppler 19 in Figur 4 bzw. 39 in Figur 5 können eines oder mehrere ISDN-Signale durch Füllinformationen FI ersetzt werden. Hierbei muß die Kennungsinformation in den vierzehn Bits des Zusatzsignals in jedem 64B-Codewort des Schmalbandsignals erhalten werden, um die richtige Zuordnung der ISDN-Kanäle aufrechtzuerhalten.

Das Verfahren arbeitet mit jedem 5B-codierten Zeitmultiplexsignal aus Vielfachen von 2,048 Mbit/s. So kann beispielsweise auch ein Signal der Bitrate 34,368 Mbit/s synchron auf 17 · 2,048 Mbit/s erhöht werden.

10 Patentansprüche
7 Figuren

- 13 -    VPA 83 P 1761 E

Patentansprüche

1. Verfahren zum Einfügen eines digitalen Schmalbandsignals in ein oder zum Abtrennen dieses Schmalbandsignals aus einem Zeitmultiplexsignal in einem synchronen Netz,

d a d u r c h   g e k e n n z e i c h n e t ,

daß im Zeitmultiplexsignal wenigstens ein Breitbandsignal in einem 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter übertragen werden,

daß für das Schmalbandsignal ebenfalls der 5B/6B-Leitungscode mit ausschließlich Auswahlcodewörtern verwendet wird,

daß die Auswahlcodewörter des Schmalbandsignals synchron gegen weitere Auswahlcodewörter als Füllwörter im Zeitmultiplexsignal und umgekehrt ausgewechselt werden,

daß für das Breitbandsignal nach der 5B/6B-Leitungscodierung eine Bitrate 167,1168 Mbit/s gewählt wird, daß für das Schmalbandsignal ein bis acht 160-kbit/s-ISDN-Signale (Integrated Services Digital Network) gewählt werden,

daß diese ISDN-Signale in Blöcke zu je fünfundzwanzig Bits zerlegt werden,

daß Blöcke von einem oder zwei ISDN-Signalen durch Zufügung von Zusatzsignalen in Blöcke von vierundsechzig Bits unter Erhöhung der Bitrate auf 409,6 kbit/s verlängert werden,

daß vier 409,6-kbit/s-Signale 4B-leitungscodiert zu einem 1,6384-Mbit/s-Schmalbandsignal verschachtelt werden,

daß dieses 1,6384-Mbit/s-Schmalbandsignal wortsynchron zu einem 2,4576-Mbit/s-Schmalbandsignal 4B/6B-leitungscodiert wird,

daß das 167,1168-Mbit/s-Breitbandsignal und das 2,4576-Mbit/s-Schmalbandsignal 6B-wortweise zu einem 169,5744-Mbit/s-Zeitmultiplexsignal verschachtelt werden,

daß das Schmalbandsignal an der Abtrennstelle erkannt und abgetrennt wird,

daß das Schmalbandsignal 6B/4B-Ieitungscodiert wird,

daß das Schmalbandsignal in vier 409,6-kbit/s-Signale zerlegt wird und

daß aus jedem 409,6-kbit/s-Signal die ISDN-Signale abgetrennt werden.


2. Verfahren zum Einfügen eines digitalen Schmalbandsignals in ein oder zum Abtrennen dieses Schmalbandsignals aus einem Zeitmultiplexsignal in einem synchronen Netz,

d a d u r c h   g e k e n n z e i c h n e t ,

daß im Zeitmultiplexsignal wenigstens ein Breitbandsignal in einem 5B/6B-Leitungscode, der für einige 5B-Codewörter in der positiven und negativen Gruppe gleiche 6B-Codewörter (Auswahlcodewörter) enthält, sowie zusätzliche Auswahlcodewörter als Füllwörter übertragen werden,

daß für das Schmalbandsignal ebenfalls der 5B/6B-Leitungscode mit ausschließlich Auswahlcodewörtern verwendet wird,

daß die Auswahlcodewörter des Schmalbandsignals synchron gegen weitere Auswahlcodewörter als Füllwörter im Zeitmultiplexsignal und umgekehrt ausgewechselt werden,

daß für das Breitbandsignal vor der 5B/6B-Leitungscodierung eine Bitrate 139,264 Mbit/s gewählt wird, daß für das Schmalbandsignal ein bis acht 160-kbit/s-ISDN-Signale gewählt werden,

daß diese ISDN-Signale in Blöcke zu je fünfundzwanzig Bits zerlegt werden,

daß Blöcke von einem oder zwei ISDN-Signalen durch Zufügung von Zusatzsignalen in Blöcke von vierundsechzig

0143269

Bits unter Erhöhung der Bitrate auf 409,6 kbit/s verlängert werden,

daß vier 409,6-kbit/s-Signale 4B-leitungscodiert zu
einem 1,6384-Mbit/s-Schmalbandsignal verschachtelt
werden,

daß dieses 1,6384-Mbit/s-Schmalbandsignal wortsynchron
zu einem 2,048-Mbit/s-Schmalbandsignal 4B/5B-leitungscodiert wird,

daß das 139,264-Mbit/s-Breitbandsignal und das 2,048-
Mbit/s-Schmalbandsignal 5B-wortweise zu einem 141,312-
Mbit/s-Zeitmultiplexsignal verschachtelt werden,

daß dieses wortsynchron zu einem 169,5744-Mbit/s-Zeitmultiplexsignal 5B/6B-leitungscodiert wird,

daß das Schmalbandsignal an der Abtrennstelle erkannt
und abgetrennt wird,

daß das Schmalbandsignal 6B/4B-leitungsdecodiert wird, daß das Schmalbandsignal in vier 409,6-kbit/s-Signale
zerlegt wird und

daß aus jedem 409,6-kbit/s-Signal die ISDN-Signale abgetrennt werden.


3. Verfahren nach Anspruch 1,
d a d u r c h   g e k e n n z e i c h n e t ,
daß als Zusatzsignale Kennungsinformationen eingespeist
werden.


4. Verfahren nach Anspruch 1 oder 2,
d a d u r c h   g e k e n n z e i c h n e t ,
daß zum Erkennen des Schmalbandsignals die zyklisch
auftretende Folge von Auswahlcodewörtern des Schmalbandsignals ausgewertet wird.


5. Verfahren nach Anspruch 1 oder 2,
d a d u r c h   g e k e n n z e i c h n e t ,
daß zur Übertragung eines oder zweier ISDN-Signale in
Schmalbandsignalen das 2,048-Mbit/s-Schmalbandsignal
durch fünffache Wiederholung jedes Bits eines 409,6-
kbit/s-Signals gewonnen wird.

6. Verfahren nach Anspruch 1 oder 2,

d a d u r c h   g e k e n n z e i c h n e t ,

daß die Bitrate des 5B-codierten Zeitmultiplexsignals als Vielfaches von 2,048-Mbit/s gewählt wird.

7. Anordnung zur Durchführung des Verfahrens nach

Anspruch 1,

d a d u r c h   g e k e n n z e i c h n e t ,

daß eine Quelle (17) für das Zeitmultiplexsignal vorgesehen ist,

daß ein ISDN/4B-Umsetzer (23) mit acht Eingängen (24-26) vorgesehen ist, dem ein 4B/6B-Umsetzer (22) nachgeschaltet ist,

daß der Quelle (17) und dem 6B/4B-Umsetzer (23) ein Multiplexer (21) nachgeschaltet ist,

daß empfangsseitig ein Demultiplexer (27) vorgesehen ist, dem einerseits eine Senke (20) für das Zeitmultiplexsignal und andererseits ein 6B/4B-Umsetzer (28) mit nachgeschaltetem 4B/ISDN-Umsetzer (29) mit acht Ausgängen (30 bis 32) nachgeschaltet ist (Fig. 4).

8. Anordnung zur Durchführung des Verfahrens nach Anspruch 2,

d a d u r c h   g e k e n n z e i c h n e t ,

daß eine Quelle (33) für das Zeitmultiplexsignal vorgesehen ist,

daß ein ISDN/4B-Umsetzer (23) mit acht Eingängen vorgesehen ist, dem ein 4B/5B-Umsetzer (36) nachgeschaltet ist,

daß der Quelle (33) einerseits und dem 4B/5B-Umsetzer (36) andererseits ein Multiplexer (35) und ein 5B/6B-Umsetzer (37) nachgeschaltet sind,

daß empfangsseitig ein 6B/5B-Umsetzer (38) und ein Demultiplexer (40) vorgesehen sind, dem einerseits eine Senke (42) für das Zeitmultiplexsignal und andererseits ein 5B/4B-Umsetzer (41) und ein 4B/ISDN-Umsetzer (29) mit acht Ausgängen (30 bis 32) nachgeschaltet sind (Fig.5).

0143269
83 P 1761 E

9. Anordnung nach Anspruch 7 oder 8,
d a d u r c h   g e k e n n z e i c h n e t ,
daß im ISDN/4B-Umsetzer (23) jedem Eingang (43 bis 50)
ein ISDN/25B-Umsetzer (51 bis 58) nachgeordnet ist,
daß die Ausgänge jeweils zweier ISDN/25B-Umsetzer (51,
52; 53,54; 55,56; 57,58) mit jeweils einem Multiplexer
(59-62) verbunden sind, der zusätzlich einen Eingang
(63 bis 67) für ein 14B-Codewort aufweist und
daß ein weiterer Multiplexer (67) vorgesehen ist, dessen
Eingänge mit den Ausgängen der genannten Multiplexer
(59 bis 62) verbunden sind und dessen Ausgang (68) als
Gesamtausgang dient (Fig. 6).

10. Anordnung nach Anspruch 7 oder 8,
d a d u r c h   g e k e n n z e i c h n e t ,
daß im 4B/ISDN-Umsetzer (29) ein Demultiplexer (70) mit
einem Eingang (69) vorgesehen ist,
daß vier weitere Demultiplexer (71 bis 74) vorgesehen
sind, deren Eingänge jeweils mit einem der vier Ausgänge des erstgenannten Demultiplexers (70) verbunden
sind und die erste Ausgänge (75 bis 78) aufweisen und
daß 25B/ISDN-Umsetzer (79 bis 86) vorgesehen sind, von
denen jeweils zwei mit zwei weiteren Ausgängen der
letztgenannten Demultiplexer (71 bis 74) verbunden sind
und je einen Ausgang (87 bis 94) aufweisen (Fig. 7).

0143269

# FIG 1

| 5B-Codewort | | 6B-Codewort | | | | | |
|---|---|---|---|---|---|---|---|
| | | Gruppe + | | Folge-gruppe | Gruppe - | | Folge-gruppe |
| 0 | 00000 | 50 | 110010 | + | 50 | 110010 | – |
| 1 | 00001 | 51 | 110011 | – | 33 | 100001 | + |
| 2 | 00010 | 54 | 110110 | – | 34 | 100010 | + |
| 3 | 00011 | 35 | 100011 | + | 35 | 100011 | – |
| 4 | 00100 | 53 | 110101 | – | 36 | 100100 | + |
| 5 | 00101 | 37 | 100101 | + | 37 | 100101 | – |
| 6 | 00110 | 38 | 100110 | + | 38 | 100110 | – |
| 7 | 00111 | 39 | 100111 | – | 7 | 000111 | – |
| 8 | 01000 | 43 | 101011 | – | 40 | 101000 | + |
| 9 | 01001 | 41 | 101001 | + | 41 | 101001 | – |
| 10 | 01010 | 42 | 101010 | + | 42 | 101010 | – |
| 11 | 01011 | 11 | 001011 | + | 11 | 001011 | – |
| 12 | 01100 | 44 | 101100 | + | 44 | 101100 | – |
| 13 | 01101 | 45 | 101101 | – | 5 | 000101 | + |
| 14 | 01110 | 46 | 101110 | – | 6 | 000110 | + |
| 15 | 01111 | 14 | 001110 | + | 14 | 001110 | – |
| 16 | 10000 | 49 | 110001 | + | 49 | 110001 | – |
| 17 | 10001 | 57 | 111001 | – | 17 | 010001 | + |
| 18 | 10010 | 58 | 111010 | – | 18 | 010010 | + |
| 19 | 10011 | 19 | 010011 | + | 19 | 010011 | – |
| 20 | 10100 | 52 | 110100 | + | 52 | 110100 | – |
| 21 | 10101 | 21 | 010101 | + | 21 | 010101 | – |
| 22 | 10110 | 22 | 010110 | + | 22 | 010110 | – |
| 23 | 10111 | 23 | 010111 | – | 20 | 010100 | + |
| 24 | 11000 | 56 | 111000 | + | 24 | 011000 | + |
| 25 | 11001 | 25 | 011001 | + | 25 | 011001 | – |
| 26 | 11010 | 26 | 011010 | + | 26 | 011010 | – |
| 27 | 11011 | 27 | 011011 | – | 10 | 001010 | + |
| 28 | 11100 | 28 | 011100 | + | 28 | 011100 | – |
| 29 | 11101 | 29 | 011101 | – | 9 | 001001 | + |
| 30 | 11110 | 30 | 011110 | – | 12 | 001100 | + |
| 31 | 11111 | 13 | 001101 | + | 13 | 001101 | – |

# FIG 2

| 4B-Codewort | 5B-Codewort | | 6B-Codewort | |
|---|---|---|---|---|
| **NI** | | | | |
| 0 0 0 0 | 0 | 0 0 0 0 0 | 50 | 1 1 0 0 1 0 |
| 0 0 0 1 | 3 | 0 0 0 1 1 | 35 | 1 0 0 0 1 1 |
| 0 0 1 0 | 5 | 0 0 1 0 1 | 37 | 1 0 0 1 0 1 |
| 0 0 1 1 | 6 | 0 0 1 1 0 | 38 | 1 0 0 1 1 0 |
| 0 1 0 0 | 9 | 0 1 0 0 1 | 41 | 1 0 1 0 0 1 |
| 0 1 0 1 | 10 | 0 1 0 1 0 | 42 | 1 0 1 0 1 0 |
| 0 1 1 0 | 12 | 0 1 1 0 0 | 44 | 1 0 1 1 0 0 |
| 0 1 1 1 | 15 | 0 1 1 1 1 | 14 | 0 0 1 1 1 0 |
| 1 0 0 0 | 16 | 1 0 0 0 0 | 49 | 1 1 0 0 0 1 |
| 1 0 0 1 | 19 | 1 0 0 1 1 | 19 | 0 1 0 0 1 1 |
| 1 0 1 0 | 21 | 1 0 1 0 1 | 21 | 0 1 0 1 0 1 |
| 1 0 1 1 | 22 | 1 0 1 1 0 | 22 | 0 1 0 1 1 0 |
| 1 1 0 0 | 25 | 1 1 0 0 1 | 25 | 0 1 1 0 0 1 |
| 1 1 0 1 | 26 | 1 1 0 1 0 | 26 | 0 1 1 0 1 0 |
| 1 1 1 0 | 28 | 1 1 1 0 0 | 28 | 0 1 1 1 0 0 |
| 1 1 1 1 | 31 | 1 1 1 1 1 | 13 | 0 0 1 1 0 1 |
| **FI** | | | | |
| FW1 | 11 | 0 1 0 1 1 | 11 | 0 0 1 0 1 1 |
| FW2 | 20 | 1 0 1 0 0 | 52 | 1 1 0 1 0 0 |

FIG 3

FIG 4

# FIG 5

0143269

0143269

FIG 6

23

0143269

FIG 7